# DEMANDE DE BREVET EUROPEEN

(11) **EP 1 048 517 A1**
(43) Date de publication de la demande: **02.11.2000**
(21) Numéro de dépôt: 00401195.3
(22) Date de dépôt: 28.04.2000
(51) Int. Cl.: B60N 2/46, B60J 5/04

(54) **Porte de véhicule automobile munie d'un accoudoir mobile**

(30) Priorité: 30.04.1999 FR 9905551
(71) Demandeur: ECIA INDUSTRIE, 92100 Boulogne (FR)
(72) Inventeur: Heranney, Yves, 25200 Montbeliard (FR)
(74) Mandataire: Jacobson, Claude

(57) **Abrégé**

Cette porte comprend un panneau interne (14), muni d'une surface (14I) recouverte d'un revêtement apparent (16), et un organe- mobile (22) déplaçable sensiblement parallèlement à la surface revêtue (14I). Le revêtement (16) est déformable élastiquement en épaisseur. L'organe mobile (22) se déplace sans jeu au contact de ce revêtement (16) par pincement du revêtement (16) entre l'organe mobile et le panneau. L'organe mobile est par exemple un accoudoir réglable en hauteur à l'aide des moyens électriques.

## Description

La présente invention concerne une porte de véhicule automobile munie d'un organe mobile tel qu'un accoudoir.

On connaît déjà dans l'état de la technique une porte de véhicule automobile du type comprenant un panneau interne, muni d'une surface recouverte d'un revêtement apparent, et un organe mobile déplaçable sensiblement parallèlement à la surface revêtue.

L'organe mobile peut former notamment un accoudoir réglable en hauteur. Dans ce cas, il existe parfois un jeu entre la surface revêtue du panneau et l'accoudoir qui présente divers inconvénients en particulier esthétiques.

L'invention a notamment pour but d'éviter le jeu entre la surface revêtue du panneau de porte et l'accoudoir mobile.

A cet effet, l'invention a pour objet une porte de véhicule automobile, du type précité, caractérisée en ce que le revêtement est déformable élastiquement en épaisseur, l'organe mobile se déplaçant sans jeu au contact de ce revêtement par pincement du revêtement entre l'organe mobile et le panneau.

Suivant d'autres caractéristiques de cette porte :
- le revêtement comprend une peau apparente souple recouvrant un substrat en mousse ;
- l'organe mobile est guidé en translation par des moyens complémentaires portés par cet organe mobile et le panneau ;
- les moyens de guidage comprennent une lumière rectiligne ménagée dans le panneau dans laquelle est guidé un doigt formant coulisseau, solidaire de l'organe mobile, traversant la lumière, le panneau étant pincé entre, d'une part, une paroi de glissement de l'organe mobile reliée à une première extrémité du coulisseau, et, d'autre part, deux ailes de pincement reliées à la seconde extrémité du coulisseau ;
- le coulisseau est évidé de façon à être déformable élastiquement radialement dans un plan sensiblement parallèle à la lumière de guidage ;
- la paroi de glissement de l'organe mobile et les ailes de pincement sont en contact avec des bossages rectilignes de glissement du panneau ;
- des patins de glissement en matériau antifriction sont disposés dans au moins certaines zones de contact entre, d'une part, le panneau, et, d'autre part, la paroi de glissement ou les ailes pincement ;
- la lumière de guidage comporte une extrémité élargie de passage des ailes de pincement lors du montage des moyens de guidage ;
- les moyens de guidage comprennent une glissière fixe, solidaire du panneau, munie d'une lumière rectiligne dans laquelle est guidée une glissière mobile, solidaire de l'organe mobile, traversant la lumière de guidage, la glissière fixe étant pincée entre, d'une part, une paroi de glissement de l'organe mobile reliée à la glissière mobile, et d'autre part, un épaulement de cette glissière mobile ;
- la glissière fixe est en contact avec des nervures rectilignes de glissement ménagées sur la paroi de glissement ;
- des patins de glissement en matériau antifriction sont disposés dans au moins certaines zones de contact entre, d'une part, la glissière fixe et, d'autre part, la glissière mobile ou la paroi de glissement ;
- le panneau est fixé sur une armature de la porte, la glissière fixe étant fixée sur le panneau et l'armature par au moins une première vis traversant la glissière fixe, le panneau et l'armature, vissée dans un écrou solidaire de l'armature, et par au moins une seconde vis traversant la glissière fixe et vissée dans un bossage emboîté dans un orifice de positionnement du panneau par rapport à l'armature, ménagé dans cette armature ;
- la porte comprend des moyens d'entraînement de l'organe mobile du type à pignon et crémaillère comprenant un motoréducteur alimenté électriquement, porté par une armature de la porte, séparé de l'organe mobile par le panneau, et une crémaillère couplée au motoréducteur, muni de prolongements d'extrémité, solidaires de l'organe mobile, s'étendant à travers des ouvertures du panneau ;
- l'organe mobile forme un accoudoir réglable en hauteur.

L'invention sera mieux comprise à la lecture de la description qui va suivre donnée uniquement à titre d'exemple et faite en se référant aux dessins dans lesquels :
- la figure 1 est une vue de face du côté interne d'une porte de véhicule automobile selon l'invention ;
- la figure 2 est une vue en coupe suivant la ligne 2-2 de la figure 1 ;
- la figure 3 est une vue en perspective du moto-réducteur représenté sur les figures précédentes ;
- la figure 4 est une vue en coupe suivant la ligne 4-4 de la figure 1 ;
- la figure 5 est une vue en coupe suivant la ligne 5-5 de la figure 4 ;
- la figure 6 est une vue de détail de la partie cerclée 6 de la figure 4 ;
- la figure 7 est une vue similaire à la figure 1, à échelle agrandie, montrant une variante de réalisation d'un ensemble de guidage de l'organe mobile ;
- la figure 8 est une vue en coupe suivant la ligne 8-8 de la figure 7.

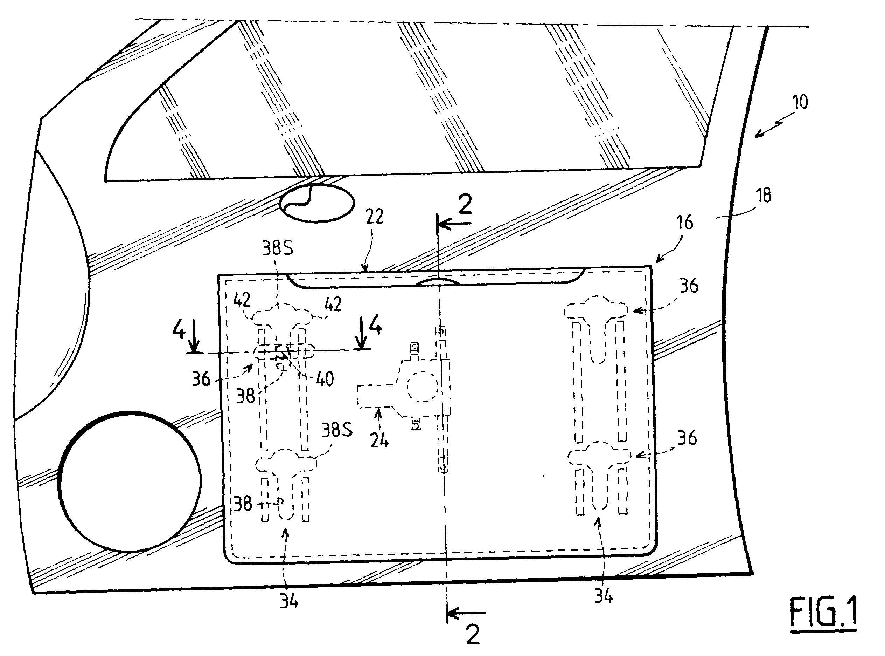

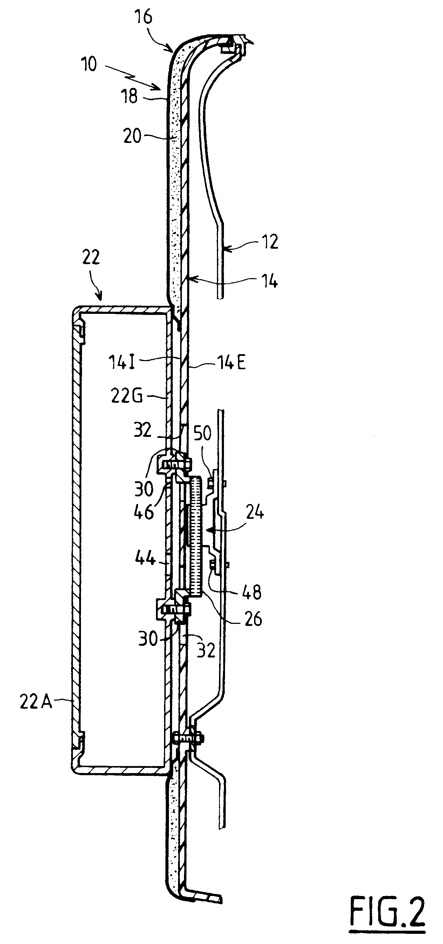

On a représenté sur les figures 1 et 2 une porte de véhicule automobile selon l'invention, désignée par la référence générale 10.

Dans ce qui suit les orientations interne et externe sont considérées par rapport à l'intérieur et l'extérieur du véhicule, la porte étant fermée.

La porte 10 comprend une armature métallique 12 portant un panneau interne 14, de préférence en plastique. Ce panneau 14 est délimité par deux surfaces opposées interne 14I et externe 14E. La surface 14I est recouverte d'un revêtement apparent 16. Ce dernier comprend une couche formant une peau apparente souple 18 recouvrant un substrat en mousse 20 fixé de façon connue en soi sur le panneau 14. La peau 18 et le substrat en mousse 20 sont fabriqués de préférence dans des matériaux synthétiques classiques. Le revêtement 16 est déformable élastiquement en épaisseur.

La porte 10 comprend également un organe mobile déplaçable sensiblement parallèlement à la surface revêtue 14I. Cet organe mobile est, dans l'exemple illustré, un accoudoir 22 réglable en hauteur. De préférence, cet accoudoir 22 a une forme générale de caisson, comme on peut le voir notamment sur la figure 2. L'accoudoir 22 est par exemple en plastique.

L'accoudoir 22 est déplaçable en hauteur à l'aide de moyens d'entraînement du type à pignon et crémaillère. Ces moyens comprennent, de préférence, un motoréducteur 24, de type classique, alimenté électriquement. Ce motoréducteur 24 est fixé de façon connue en soi sur l'armature 12 de la porte, par exemple par vissage (voir figure 2). Le motoréducteur 24 est séparé de l'accoudoir 22 par le panneau 14.

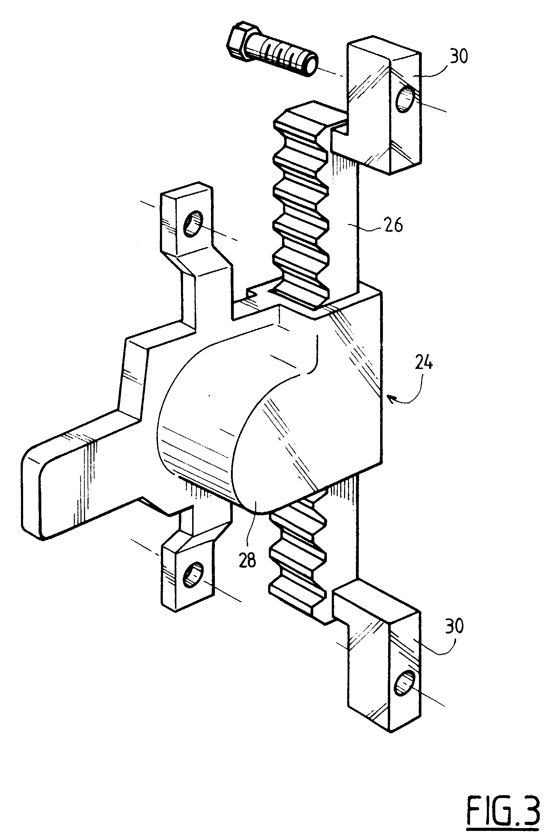

En se référant plus particulièrement aux figures 2 et 3, on voit qu'une crémaillère 26 est couplée au motoréducteur 24 par l'intermédiaire d'un pignon (non visible sur les figures) logé dans un boîtier 28 de ce motoréducteur 24 et engrenant avec cette crémaillère 26. La crémaillère 26 est guidée de façon connue en soi dans le boîtier 28.

La crémaillère 26 est munie de prolongements d'extrémité 30 fixés de façon connue en soi sur une paroi de glissement 22G de l'accoudoir 22, par exemple par vissage. On notera que les prolongements d'extrémité 30 s'étendent à travers des ouvertures 32 du panneau 14. La dimension de ces ouvertures 32 est adaptée pour permettre des déplacements verticaux des prolongements 30 de la crémaillère.

L'accoudoir 22 est guidé en translation, sensiblement verticalement, par deux ensembles de guidage 34. Ces deux ensembles 34 sont similaires et représentés partiellement en pointillés sur la figure 1.

Chaque ensemble de guidage 34 comporte des moyens de guidage complémentaires 36 disposés en double les uns au-dessus des autres.

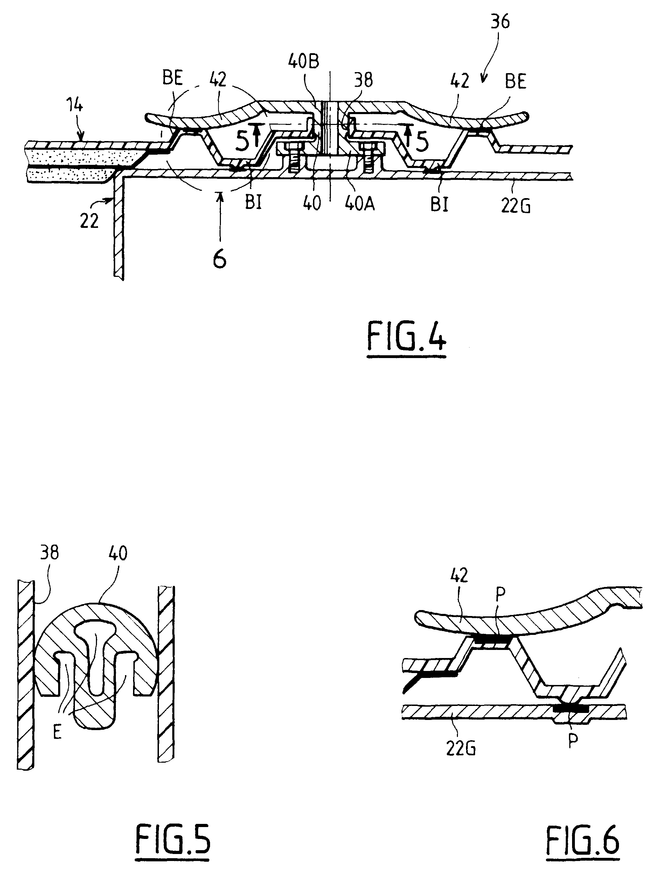

Les moyens de guidage 36 sont représentés plus en détail sur les figures 4 à 6. En se référant à ces figures, ainsi qu'à la figure 1, on voit que les moyens de guidage 36 comprennent une lumière rectiligne 38, sensiblement verticale, ménagée dans le panneau 14. Dans cette lumière 38, est guidé un doigt formant coulisseau 40, traversant la lumière 38.

Le coulisseau 40, par exemple en plastique, comporte une première extrémité 40A fixée de façon connue en soi sur la paroi de glissement 22G de l'accoudoir, notamment par vissage, et une seconde extrémité 40B prolongée par deux ailes de pincement 42, de préférence en plastique. Ces ailes 42 s'étendent sensiblement parallèlement à la paroi de glissement 22G, symétriquement par rapport à l'axe du coulisseau 40.

Le panneau 14 est pincé entre la paroi de glissement 22G de l'accoudoir et les deux ailes de pincement 42 qui sont déformables élastiquement.

Afin de limiter les forces de frottement entre, d'une part, le panneau 14, et d'autre part, la paroi de glissement 22 de l'accoudoir et les ailes de pincement 42, cette paroi de glissement 22G et ses ailes 42 sont en contact avec des bossages sensiblement rectilignes du panneau. Ainsi, la paroi de glissement 22G est en contact avec des bossages de glissement internes Bl du panneau 14 et les ailes 42 sont en contact avec des bossages de glissement BE de ce panneau 14.

De préférence, comme cela est plus clairement visible sur la figure 6, des patins de glissement P en matériau antifriction, tels que le téflon, le polyacétal ou la feutrine, sont disposés dans au moins certaines zones de contact entre, d'une part, le panneau 14, et, d'autre part, la paroi de glissement 22G ou les ailes de pincement 42.

De préférence également, comme cela est visible sur la figure 5, le coulisseau 40 est muni d'évidements E de façon à être déformable élastiquement radialement dans un plan sensiblement parallèle à la lumière de guidage 38 (notamment le plan de la figure 5) et ainsi faciliter le déplacement de ce coulisseau 40 dans cette lumière 38.

En se référant à nouveau à la figure 1, on voit que l'extrémité supérieure 38S de la lumière est élargie de façon à permettre le passage des ailes de pincement 42 lors du montage des moyens de guidage 36.

Pour le montage de la porte 10, on réalise tout d'abord un module préassemblé comprenant le panneau 14, l'accoudoir 22 et le motoréducteur 24. Ce dernier est relié à l'accoudoir 22 par l'intermédiaire de la crémaillère 26, les prolongements d'extrémité 30 de cette crémaillère s'étendant à travers des ouvertures 32 du panneau 14.

Ensuite, le module préassemblé est fixé sur l'armature 12 de la porte. Afin de permettre cette opération, l'accoudoir 22 est muni d'un panneau amovible 22A qui, une fois séparé de l'accoudoir 22, permet un accès à des orifices 44,46 ménagés dans la paroi de glissement 22G de l'accoudoir. Ces orifices 44, 46 permettent la mise en place de vis 48,50 de fixation du motoréducteur 24 sur l'armature 12 (voir figure 2).

Le réglage en hauteur de l'accoudoir 22 est très simple. L'utilisateur commande le motoréducteur 24 à l'aide de moyens classiques. Lorsque ce motoréducteur 24 est activé, la crémaillère 26 se déplace sensiblement verticalement, dans le sens de réglage sélectionné par l'utilisateur. L'accoudoir 22, relié à la crémaillère 26 et convenablement guidé par les moyens 36, se déplace sans jeu au contact du revêtement 16 par pincement de ce revêtement 16 (déformable élastiquement en épaisseur) entre la paroi de glissement 22G de l'accoudoir et le panneau 14, comme cela est représenté notamment sur la figure 2.

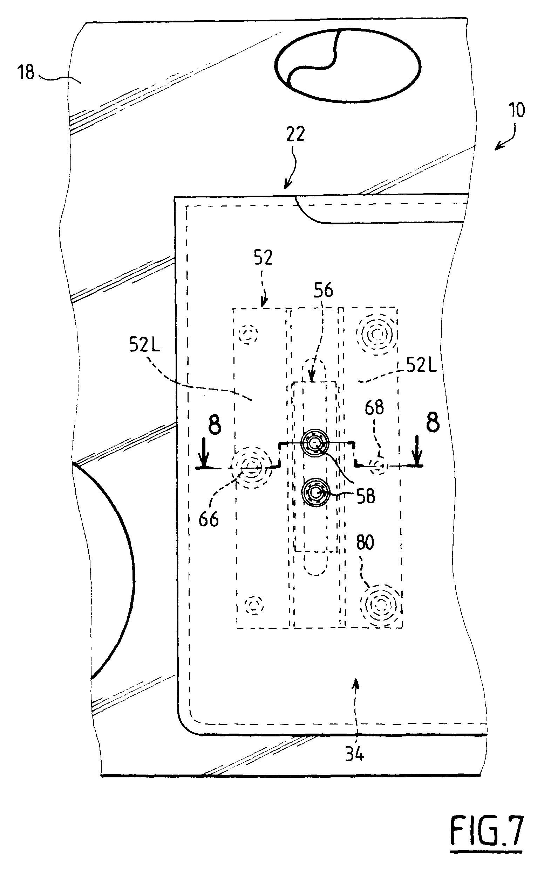

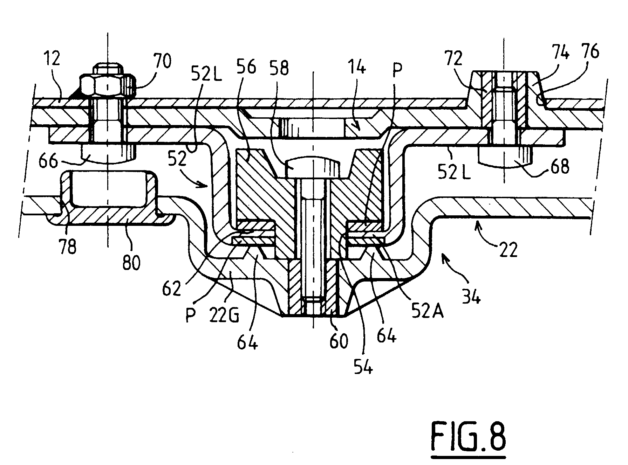

Sur les figures 7 et 8, on a représenté une variante de réalisation de l'ensemble de guidage 34. Sur ces figures, les éléments analogues à ceux des figures précédentes sont désignés par des références identiques.

Dans cette variante, l'ensemble de guidage 34 comprend une glissière fixe 52 solidaire du panneau 14 munie d'une lumière rectiligne 54, dans laquelle est guidée une glissière mobile 56, solidaire de l'accoudoir 22, traversant la lumière 54.

Les glissières fixe 52 et mobile 56 ont des formes générales allongées parallèlement à la direction de la lumière 54, la section transversale de la glissière fixe 52 ayant une forme générale en "Ω".

La glissière mobile 56, par exemple en polyacétal, est reliée à la paroi de glissement 22G de l'accoudoir à l'aide de moyens connus comprenant, par exemple, deux vis 58 vissées chacune dans une douille taraudée 60 insérée dans la paroi de glissement 22G (voir figures 7 et 8).

La glissière fixe 52 comporte une âme 52A pincée entre, d'une part, la paroi de glissement 22G de l'accoudoir, et d'autre part, un double épaulement 62 de la glissière mobile 56.

Le cas échéant, comme dans l'exemple illustré, la paroi de glissement 22G a, au voisinage de la glissière fixe 52G, une section complémentaire de cette dernière en forme de "Ω".

De préférence, la glissière fixe 52 est en contact avec des nervures rectilignes de glissement 64 ménagées sur la paroi de glissement 22G.

De préférence également, des patins de glissement P en matériau antifriction (téflon, feutrine, polyacétal, etc ...), analogues à ceux illustrés sur la figure 6, sont disposés dans au moins certaines zones de contact entre, d'une part, la glissière fixe 52 et, d'autre part, la glissière mobile 56 ou la paroi de glissement 22G.

L'âme 52A de la glissière fixe 52 est prolongée par deux ailes 52L fixées sur le panneau 14 et l'armature 12 par au moins des première et seconde vis 66, 68 représentées notamment sur la figure 8.

La première vis 66 traverse une première aile 52L de la glissière fixe, le panneau 14 et l'armature 12. Cette première vis 66 est vissée dans un écrou 70 solidaire de l'armature 12.

La seconde vis 68 traverse la seconde aile 52L de la glissière fixe et est vissée dans une douille taraudée 72 insérée dans un bossage 74 emboîté dans un orifice 76 ménagé dans l'armature 12. Le bossage 74 coopère avec l'orifice 76 pour positionner le panneau 14 par rapport à l'armature 12.

Les première et seconde vis 66, 68 permettent donc de fixer, d'une part, le panneau 14 sur l'armature 12 et, d'autre part, la glissière fixe 52 sur ce panneau 14 et cette armature 12.

En se référant à la figure 7, on voit que, dans l'exemple illustré, l'ensemble de guidage 34 comprend trois premières vis 66 et trois secondes vis 68 agencées en quinconce sur les deux ailes 52L de la glissière fixe.

Pour le montage de la porte 10, les glissières fixe 52 et mobile 56 sont reliées respectivement au panneau 14 et à l'accoudoir 22, au moyen de vis 58, 68, de façon à former le module pré-assemblé, évoqué précédemment, comprenant le panneau 14, l'accoudoir 22 et le moto-réducteur 24.

Lorsque le module pré-assemblé est fixé sur l'armature 12, le panneau 14 et la glissière fixe 52 sont fixés sur cette armature 12 au moyen de vis 66. Ces dernières sont accessibles à travers des orifices 78, ménagés dans la paroi de glissement 22G, obturables par des bouchons 80 (voir figure 8).

Le réglage en hauteur de l'accoudoir 22, comprenant les ensembles de guidage 34 selon la variante illustrée sur les figures 7 et 8, se fait comme décrit précédemment.

## Revendications

1. Porte de véhicule automobile du type comprenant un panneau interne (14), muni d'une surface (14I) recouverte d'un revêtement apparent (16), et un organe mobile (22) déplaçable sensiblement parallèlement à la surface revêtue (14I), **caractérisée en ce que** le revêtement (16) est déformable élastiquement en épaisseur, l'organe mobile (22) se déplaçant sans jeu au contact de ce revêtement (16) par pincement du revêtement (16) entre l'organe mobile (22) et le panneau (14).

2. Porte selon la revendication 1, caractérisée en ce que le revêtement (16) comprend une peau apparente souple (18) recouvrant un substrat en mousse (20).

3. Porte selon la revendication 1 ou 2, caractérisée en ce que l'organe mobile (22) est guidé en translation par des moyens complémentaires (34,36,38,40,BI,BE,22G,42;52,56) portés par cet organe mobile (22) et le panneau (14).

4. Porte selon la revendication 3, caractérisée en ce que les moyens de guidage comprennent une lumière rectiligne (38) ménagée dans le panneau (14) dans laquelle est guidé un doigt formant coulisseau (40), solidaire de l'organe mobile (22), traversant la lumière (38), le panneau (14) étant pincé entre, d'une part, une paroi de glissement (22G) de l'organe mobile reliée à une première extrémité (40A) du coulisseau, et, d'autre part, deux ailes de pincement (42) reliées à la seconde extrémité (40B) du coulisseau.

5. Porte selon la revendication 4, caractérisée en ce que le coulisseau (40) est évidé de façon à être déformable élastiquement radialement dans un plan sensiblement parallèle à la lumière de guidage (38).

6. Porte selon la revendication 4 ou 5, caractérisée en ce que la paroi de glissement (22G) de l'organe mobile et les ailes de pincement (42) sont en contact avec des bossages rectilignes de glissement (BI,BE) du panneau.

7. Porte selon l'une quelconque des revendications 4 à 6, caractérisée en ce que des patins de glissement (P) en matériau antifriction sont disposés dans au moins certaines zones de contact entre, d'une part, le panneau (14), et, d'autre part, la paroi de glissement (22G) ou les ailes pincement (42).

8. Porte selon l'une quelconque des revendications 4 à 7, caractérisée en ce que la lumière de guidage (38) comporte une extrémité élargie (38S) de passage des ailes de pincement (42) lors du montage des moyens de guidage (36).

9. Porte selon la revendication 3, caractérisée en ce que les moyens de guidage comprennent une glissière fixe (52), solidaire du panneau (14), munie d'une lumière rectiligne (54) dans laquelle est guidée une glissière mobile (56), solidaire de l'organe mobile (22), traversant la lumière de guidage (54), la glissière fixe (52) étant pincée entre, d'une part, une paroi de glissement (22G) de l'organe mobile reliée à la glissière mobile (56), et d'autre part, un épaulement (62) de cette glissière mobile (56).

10. Porte selon la revendication 9, caractérisée en ce que la glissière fixe (52) est en contact avec des nervures rectilignes de glissement (64) ménagées sur la paroi de glissement (22G).

11. Porte selon la revendication 9 ou 10, caractérisée en ce que des patins de glissement (P) en matériau antifriction sont disposés dans au moins certaines zones de contact entre, d'une part, la glissière fixe (52) et, d'autre part, la glissière mobile (56) ou la paroi de glissement (22G).

12. Porte selon l'une quelconque des revendications 9 à 12, caractérisée en ce que le panneau (14) est fixé sur une armature (12) de la porte, la glissière fixe (52) étant fixée sur le panneau (14) et l'armature (12) par au moins une première vis (66) traversant la glissière fixe (52), le panneau (14) et l'armature (12), vissée dans un écrou (70) solidaire de l'armature (12), et par au moins une seconde vis (68) traversant la glissière fixe (52) et vissée dans un bossage (74) emboîté dans un orifice (76) de positionnement du panneau (14) par rapport à l'armature (12), ménagé dans cette armature (12).

13. Porte selon l'une quelconque des revendications précédentes, caractérisée en ce qu'elle comprend des moyens d'entraînement de l'organe mobile (22) du type à pignon et crémaillère comprenant un motoréducteur (24) alimenté électriquement, porté par une armature (12) de la porte, séparé de l'organe mobile (22) par le panneau (14), et une crémaillère (26) couplée au motoréducteur (24), muni de prolongements d'extrémité (30), solidaires de l'organe mobile (22), s'étendant à travers des ouvertures (32) du panneau (14).

14. Porte selon l'une quelconque des revendications précédentes, caractérisée en ce que l'organe mobile (22) forme un accoudoir réglable en hauteur.
